# EUROPÄISCHE PATENTSCHRIFT

(11) **EP 0 600 174 B1**
(45) Veröffentlichungstag und Bekanntmachung des Hinweises auf die Patenterteilung: **02.12.1998**
(21) Anmeldenummer: 93115396.9
(22) Anmeldetag: 24.09.1993
(51) Int. Cl.: B23Q 17/22

(54) **Positionsanzeige**
Position indicator
Indicateur de position

(30) Priorität: 08.10.1992 DE 4233908
(43) Veröffentlichungstag der Anmeldung: 08.06.1994
(73) Patentinhaber: ACU-RITE GmbH, D-83291 Traunreut (DE)
(72) Erfinder: Gleadhall, Mark, D-83346 Bergen (DE)

(56) Entgegenhaltungen:
- DE-A- 3 324 428
- US-A- 4 365 300
- US-A- 4 366 424
- US-A- 4 641 236
- US-A- 5 051 912
- PATENT ABSTRACTS OF JAPAN vol. 10, no. 149 (P-461)(2206) 30. Mai 1986 & JP-A-61 003 058 (HITACHI) 9. Januar 1986
- TOOLING AND PRODUCTION Bd. 34, Nr. 5 , 1. Mai 1968 , SOLON US Seiten 91 - 91 'digital readout aids cam milling'

## Beschreibung

Die Erfindung betrifft eine Positionsanzeige und ein Verfahren zum Betrieb einer Positionsanzeige gemäß dem Oberbegriff des Anspruches 1 bzw. 7.

Handbediente Werkzeugmaschinen haben auch heute noch ihren festen Platz in der Produktion. Der Begriff "handbedient" soll auf diese Art von Werkzeugmaschinen bezogen sein, die keine Antriebe für Positionierung und Vorschubbewegungen haben, bei denen also weiterhin der Mensch die treibende Kraft für das Verfahren der Maschinenelemente darstellt. Lange Nebenzeiten entstehen bei diesen Maschinen insbesondere durch das vom Bedienungsmann vorzunehmende Umsetzen der Zeichnungsmaße in Verfahrwege und das bei jedem Werkstück neu notwendig werdende Aufsuchen von Positionen.

Für diese Werkzeugmaschinen sind bereits Positionsanzeigen bekannt, bei denen über eine Eingabeeinheit heit in Form einer Tastatur die Soll-Koordinatenwerte direkt von einer Werkstückzeichnung übernommen und eingegeben werden. Die Positionsanzeige weist hierzu mehrere Anzeigefelder zur Anzeige der eingegebenen Werte sowie der bei der Bearbeitung noch zu verfahrenden Wege auf. Bei bekannten Positionsanzeigen werden die eingegebenen und noch zu verfahrenden Wege stets als Koordinatenwerte eines, auf das Werkstück bezogenen Koordinatensystems angezeigt. Bei der Bedienung von Werkzeugmaschinen mit einem um eine Achse verschwenkbaren Ausleger, an dessen Ende ein längs des Auslegers verschiebbares Werkzeug angeordnet ist, hat dies den großen Nachteil, daß die angezeigten Soll-Koordinatenwerte nicht mit den vom Werkzeug zu verfahrenden Wegen übereinstimmen.

Der Erfindung liegt die Aufgabe zugrunde, eine Positionsanzeige und ein Verfahren zum Betrieb einer Positionsanzeige anzugeben, mit der/dem die Bedienperson die in der Werkstückzeichnung angegebenen, auf das Werkstück bezogenen Soll-Koordinatenwerte direkt als Eingabewerte übernehmen kann und bei der Bearbeitung die Positionsanzeige Werte anzeigt, mit denen ein sicheres und schnelles Anfahren der Zielposition ermöglicht wird, ohne daß die Bedienperson Umrechnungen durchführen muß.

Diese Aufgabe wird durch die in den Ansprüchen 1 und 7 angegebenen Merkmale gelöst.

Die Positionsanzeige gemäß der Erfindung hat den Vorteil, daß die Positionsanzeige Werte anzeigt, die an die Bewegungsachsen der Werkzeugmaschine, das sind die Linear- und/oder Drehachsen, angepaßt sind. Bei Radialbohrmaschinen können die Soll-Koordinatenwerte als X/Y-Werte direkt von der Werkstückzeichnung in die Positionsanzeige eingegeben werden, bei der Werkstückbearbeitung werden dagegen ein Winkelwert zum Verschwenken der Rundsäule sowie ein Radiuswert zum Verschieben des Auslegers angezeigt.

Vorteilhafte Ausgestaltungen der Erfindung sind in den Unteransprüchen angegeben.

Die Erfindung wird nachstehend anhand der in den Zeichnungen dargestellten Ausführungsbeispiele erläutert.

Es zeigt
- Figur 1: schematisch eine Radialbohrmaschine mit einer Positionsanzeige,
- Figur 2: eine Bedien- und Anzeigetafel der Positionsanzeige,
- Figur 3: ein zu bearbeitendes Werkstück,
- Figur 4: Anzeigefelder der Positionsanzeige bei der Eingabe,
- Figur 5: Anzeigefelder der Positionsanzeige bei der Bearbeitung
- Figur 6: ein Ablaufdiagramm zum Betrieb der Positionsanzeige.

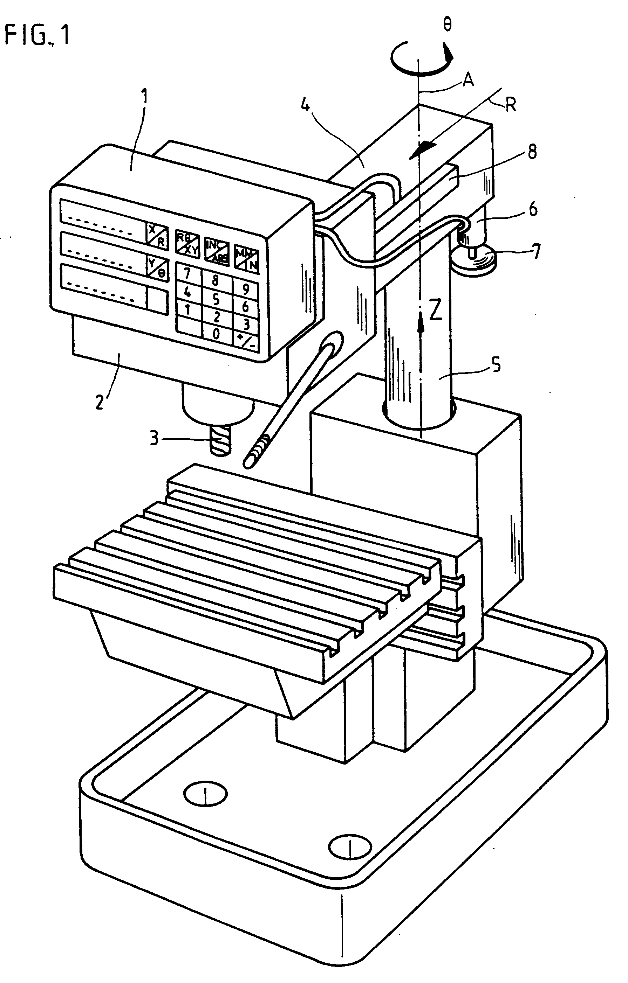

Die erfindungsgemäße Positionsanzeige 1 ist besonders vorteilhaft bei einer handbedienten Radialbohrmaschine, wie sie in Figur 1 gezeigt ist, einsetzbar. Ein Spindelstock 2 mit einem Werkzeug 3 ist bei dieser Art von Werkzeugmaschine an einem Ausleger 4 befestigt, der um die Achse A einer Rundsäule 5 schwenkbar ist. Der Spindelstock 2 ist radial längs des Auslegers 4 verschiebbar. Der Schwenkwinkel Θ des Auslegers 4 wird von einem Drehgeber 6 erfaßt, der in die Rundsäule 5 integriert ist oder außen nachträglich angebaut ist und von einem am Umfang der Rundsäule 5 abrollenden Reibrad 7 angetrieben wird. Die Verschiebung R des Spindelstockes 2 wird mit Hilfe eines Längenmeßsystems 7 erfaßt. Die positionsabhängigen Signale des Drehgebers 7 und des Längenmeßsystems 8 werden der Positionsanzeige 1 zugeführt.

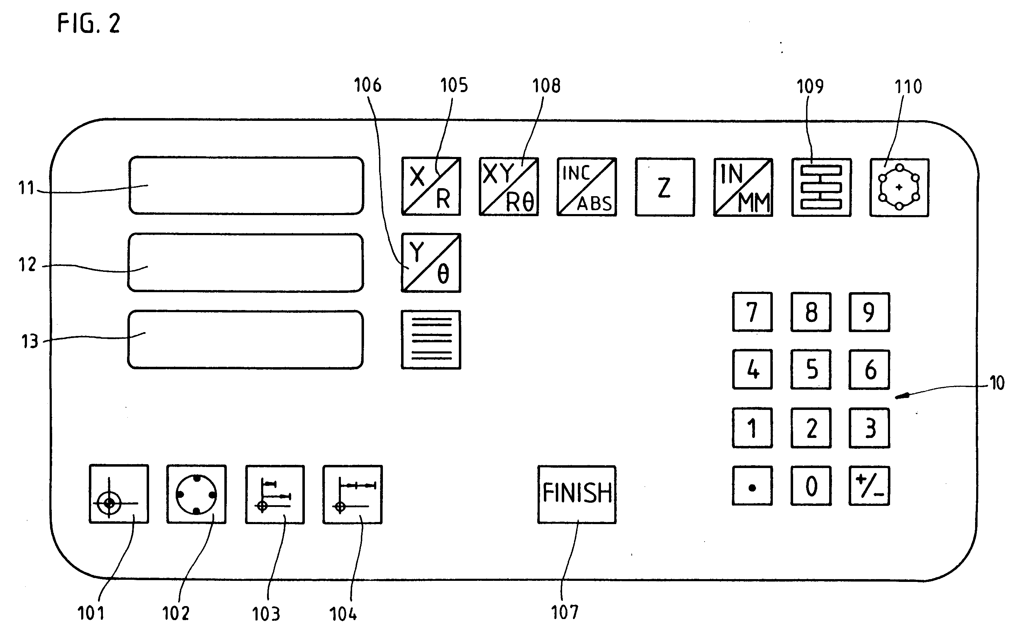

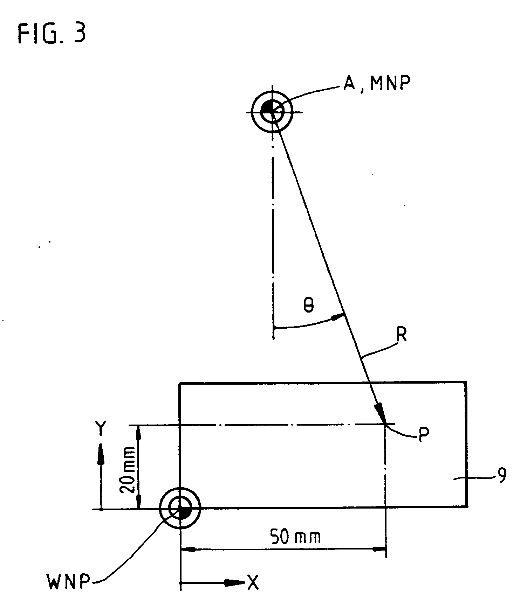

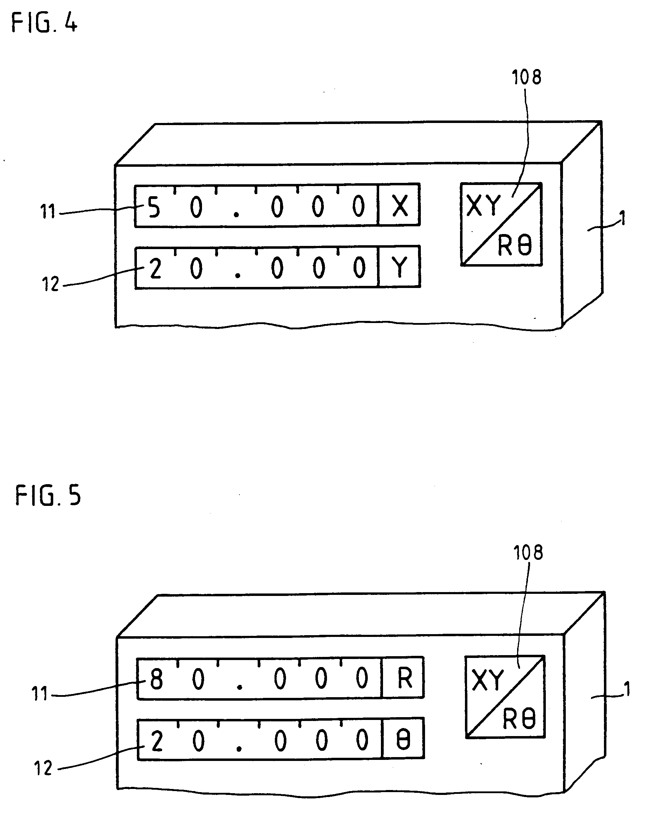

Die Positionsanzeige 1, deren Bedien- und Anzeigetafel in Figur 2 im Detail dargestellt ist, weist eine Vielzahl von Tasten 10 auf, von denen nur die wichtigsten dargestellt und erläutert werden. Soll beispielsweise das in Figur 3 dargestellte Werkstück 9 bearbeitet werden, indem im Punkt P eine Bohrung eingebracht wird, so werden als erster Schritt die Soll-Koordinaten X, Y des Punktes P eingegeben. Diese Eingabe erfolgt über die Tasten 10 der Positionsanzeige 1. Die Soll-Koordinaten X=50mm und Y=20mm können direkt von einer Werkstückzeichnung übernommen werden und beziehen sich auf ein kartesisches Koordinatensystem, dessen Ursprung der Werkstücknullpunkt WNP ist. Die eingegebenen Koordinatenwerte werden einer Speichereinheit der Positionsanzeige 1 zugeführt und an Anzeigefeldern 11, 12 angezeigt (Figur 4). Die Koordinatenwerte X, Y werden in einem Koordinatenwandler in Polarkoordinaten R, Θ umgewandelt, die sich auf das Koordinatensystem der Radialbohrmaschine beziehen. Der Ursprung dieses Koordinatensystems ist der Maschinennullpunkt MNP auf der Drehachse A der Rundsäule 5.

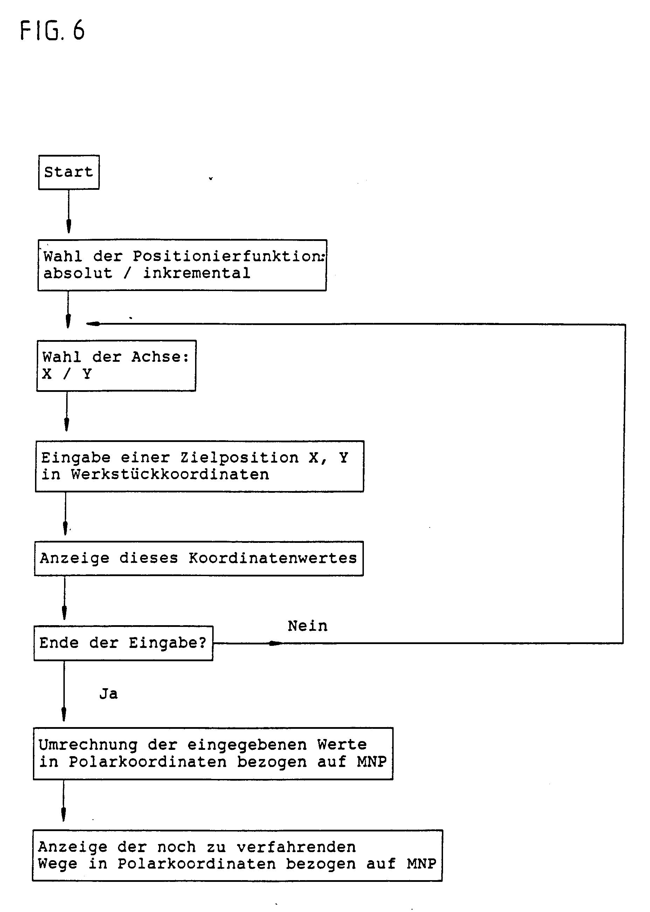

Diese Polarkoordinaten R, Θ werden bei der Bearbeitung in Form von noch zu verfahrenden Radius- und Winkelwerte in den Anzeigefeldern 11, 12 angezeigt (Figur 5). Die Bedienperson führt das Werkzeug 3 zum Punkt P, indem sie den Ausleger 4 um den im Anzeigefeld 12 sichtbaren Winkelwert Θ schwenkt, bis im Anzeigefeld 12 der Restweg "0" erscheint. Danach erfolgt die Verschiebung des Auslegers 4 um den angezeigten Restweg R. Es ist auch möglich, zuerst den Ausleger 4 zu verschieben und nachfolgend zu verschwenken. Besonders vorteilhaft ist es, wenn eine Bewegung jeweils nur in einer Achse möglich ist, indem eine der Achsen blockiert wird. Nach Erreichen der Zielposition P werden beide Achsen, also die Schwenk- und Radialbewegung des Werkzeuges 3 blockiert und eine Längsbewegung des Werkzeuges 3 nach Maßgabe eines eingegebenen Z-Koordinatenwertes durchgeführt.

Der Bezugspunkt MNP kann durch Antasten eines Prüfkörpers mit bekannten Abmessungen ermittelt werden. Der Bezugspunkt WNP wird in bekannter Weise durch die Antastung des Werkstückes 9 ermittelt. Hierzu sind die Funktionstasten 101, 102 vorgesehen.

In Figur 6 ist ein Ablaufdiagramm zum Betrieb der Positionsanzeige 1 gezeigt. Vor der Eingabe eines der Soll-Koordinatenwerte X, Y wird zuerst eine der Funktionstasten 103 oder 104 gedrückt. Die Funktionstaste 103 bedeutet, daß der nachfolgende Wert als Absolutwert einzugeben ist. Die Funktionstaste 104 bedeutet, daß der nachfolgende Wert ein Inkrementalwert ist. Nach Drücken der Funktionstaste 103 wird die Achstaste 105 zur Eingabe des X-Koordinatenwertes gedrückt und danach der Zahlenwert "50" für X=50 mm eingegeben. Dieser Zahlenwert erscheint im Anzeigefeld 11. Danach erfolgt die Eingabe des Soll-Koordinatenwertes Y=20mm indem die Achstaste 106 gedrückt wird und nachfolgend der Zahlenwert "20" eingegeben wird. Dieser Zahlenwert erscheint im Anzeigefeld 12. Die Eingabe der Soll-Koordinatenwerte X, Y wird durch Drücken der Bestätigungstaste 107 abgeschlossen, woraufhin die in der Positionsanzeige 1 abgespeicherten Eingabewerte X, Y in Polarkoordinaten R, Θ umgerechnet werden und die, auf das Koordinatensystem der Maschine bezogenen, bis zum Punkt P noch zu verfahrenden Restwege R, Θ in den Anzeigefeldern 11 und 12 angezeigt werden. Bei der Bearbeitung kann die Anzeige 11, 12 durch Drücken der Funktionstaste 108 zwischen den Restwegen in Polarkoordinaten R, Θ, bezogen auf den Maschinennullpunkt MNP und den Restwegen in kartesischen Koordinaten X, Y,bezogen auf das Werkstück 9, umgeschalten werden.

Das Anzeigefeld 13 ist für Bedienerhinweise vorgesehen, was besonders im Programmbetrieb der Positionsanzeige 1 vorteilhaft ist. Der Programmbetrieb wird durch Drücken der Taste 109 aktiviert, wobei die eingegebene Sequenz von Sollpositionen abgespeichert wird und für nachfolgende Bearbeitungen wie Bohren, Aufweiten, Senken und Gewindeschneiden zur Verfügung steht. Beim Abfahren eines eingespeicherten Programms kann der Bedienungsmann die Positionswerte aus dem Speicher einzeln abrufen und nacheinander abarbeiten.

Die Soll-Koordinatenwerte können über die Tastatur 10 eingegeben werden, als Eingabeeinheit kann aber auch ein Datenträger Verwendung finden. Ebenso ist die Eingabe über Teach In-Verfahren möglich.

Durch Drücken der Taste 110 wird die Lochkreisfunktion gewählt und ein Lochkreisrechner aktiviert. Dies ist sehr vorteilhaft, wenn mehrere Bohrlöcher auf einem gemeinsamen Kreis hergestellt werden sollen. Als Eingabewerte sind hierzu der Mittelpunkt des Lochkreises bezogen auf den Werkstücknullpunkt WNP, der Radius, die Anzahl der Löcher sowie der Ablagewinkel zum ersten Loch einzugeben. Aus den Eingabewerten berechnet die Positionsanzeige 1 die von der Radialbohrmaschine zu verfahrenden Wege in Polarkoordinaten R, Θ, bezogen auf den Maschinennullpunkt MNP. Bei der Bohrung der einzelnen Löcher des Lochkreises werden die Restwege in den Anzeigefeldern 11, 12 in Polarkoordinaten R, Θ angezeigt.

## Patentansprüche

1. Positionsanzeige einer handbedienten Werkzeugmaschine mit zumindest zwei Anzeigefeldern (11,12) für Koordinatenwerte (X,Y, R, θ) und einer Eingabeeinheit (10) Zur Eingabe von Soll-Koordinatenwerten (X, Y) für eine Zielposition (P) eines kartesischen, auf ein Werkstück (9) bezogenen Koordinatensystems, wobei der Positionsanzeige positionsabhängige Signale von Meßsystemen (7, 8) der Werkzeugmaschine zur Bestimmung der aktuellen Werkzeugposition zugeführt werden, dadurch gekennzeichnet, daß die kartesischen Koordinaten (X, Y) der Zielposition (P) in einem Koordinatenwandler der Positionsanzeige (1) auf der Grundlage des Maschinennullpunktes (MNP) der Werkzeugmaschine in Polarkoordinaten (R, θ) umgewandelt werden, die sich auf das Koordinatensystem der Werkzeugmaschine beziehen, und daß bei der manuellen Bearbeitung des Werkstückes (9) die noch zu verfahrenden Restwege bis zur Zielposition (P) in Polarkoordinaten (R, θ) angezeigt werden.

2. Positionsanzeige nach Anspruch 1, dadurch gekennzeichnet, daß zwei Anzeigefelder (11, 12) zur Anzeige von eingegebenen kartesischen X/Y-Koordinaten einer Zielposition (P) vorgesehen sind und diese gleichen Anzeigefelder (11, 12) bei der Bearbeitung des Werkstückes (9) zur Anzeige von Polarkoordinaten (R, Θ) vorgesehen sind.

3. Positionsanzeige nach einem der vorhergehenden Ansprüche, dadurch gekennzeichnet, daß die bei der Bearbeitung angezeigten Polarkoordinaten (R, Θ) die mit einem Werkzeug (3) einer Radialbohrmaschine zu verfahrenden Restwege bis zur Zielposition (P) sind, wobei ein in einem Anzeigefeld (11) angezeigter Radiuswert (R) den erforderlichen Verschiebeweg des Werkzeugs (3) in Längsrichtung eines Auslegers (4) bestimmt und ein in einem anderen Anzeigefeld (12) angezeigter Winkelwert (Θ) den erforderlichen Schwenkwinkel des Auslegers (4) um die Achse (A) einer Rundsäule (5) bestimmt.

4. Positionsanzeige nach Anspruch 3, dadurch gekennzeichnet, daß der Nullpunkt (MNP) des Koordinatensystems der Radialbohrmaschine auf der Drehachse (A) der Rundsäule (5) liegt.

5. Positionsanzeige nach einem der Ansprüche 3 oder 4, dadurch gekennzeichnet, daß zur Erfassung des Schwenkwinkels (Θ) des Auslegers (4) ein über ein Reibrad (7) angetriebener Drehgeber (6) vorgesehen ist.

6. Positionsanzeige nach Anspruch 5, dadurch gekennzeichnet, daß das Reibrad (7) am Umfang der Rundsäule (5) abrollt.

7. Verfahren zum Betrieb einer Positionsanzeige einer handbedienten Werkzeugmaschine mit zumindest zwei Anzeigefeldern (11, 12) für Koordinatenwerte (X, Y, R, θ) und einer Eingabeeinheit (10) zur Eingabe von Soll-Koordinatenwerten (X, Y) eines kartesischen, auf ein Werkstück (9) bezogenen Koordinatensystems, wobei der Positionsanzeige positionsabhängige Signale von Meßsystemen (7, 8) der Werkzeugmaschine zur Bestimmung der aktuellen Werkzeugposition zugeführt werden, gekennzeichnet durch die Schritte:
a) die Soll-Koordinaten (X, Y) einer Zielposition (P) werden durch Betätigen einer Eingabeeinheit (10) in eine Speichereinheit der Positionsanzeige eingegeben und an den Anzeigefeldern (11, 12) angezeigt,
b) die kartesischen Soll-Koordinaten (X, Y) werden in einem Koordinatenwandler in Polarkoordinaten (R, θ), die sich auf das Koordinatensystem der Werkzeugmaschine beziehen, umgewandelt,
c) die noch zu verfahrenden Restwege bis zur Zielposition (P) werden anhand der aktuellen Werkzeugposition berechnet und in Polarkoordinaten (R, θ) als Radius- und Winkelwerte in den Anzeigefeldern (11, 12) der Positionsanzeige angezeigt.

8. Verfahren nach Anspruch 7, dadurch gekennzeichnet, daß in einem weiteren Schritt
d) das Werkzeug (3) um eine vorgegebene Achse (A) um den vom Koordinatenwandler berechneten Winkelwert (Θ) geschwenkt wird und danach
e) das Werkzeug (3) um den vom Koordinatenwandler berechneten Radiuswert (R) zur Zielposition (P) verschoben wird.

9. Verfahren nach Anspruch 7, dadurch gekennzeichnet, daß in einem weiteren Schritt
f) das Werkzeug (3) um den vom Koordinatenwandler berechneten Radiuswert (R) längs eines Auslegers (4) verschoben wird und danach
g) das Werkzeug (3) um eine vorgegebene Achse (A) um den vom Koordinatenwandler berechneten Winkelwert (Θ) geschwenkt wird.

10. Verfahren nach Anspruch 8, dadurch gekennzeichnet, daß bei der Schwenkbewegung die Radialbewegung längs des Auslegers (4) blockiert ist und nach Erreichen des vorgegebenen Schwenkwinkels (Θ) diese Blockierung aufgehoben wird und die Schwenkbewegung blockiert wird.

11. Verfahren nach Anspruch 9, dadurch gekennzeichnet, daß bei der Radialbewegung die Schwenkbewegung blockiert ist und nach Erreichen des vorgegebenen Radiuswertes (R) diese Blockierung aufgehoben wird und die Radialbewegung längs des Auslegers (4) blockiert wird.

12. Verfahren nach einem der Ansprüche 7 bis 11, dadurch gekennzeichnet, daß nach Erreichen der durch X/Y-Koordinatenwerte vorgegebenen Zielposition (P) die Schwenk- und Radialbewegung des Werkzeuges (3) blockiert wird und eine Längsbewegung des Werkzeuges (3) nach Maßgabe eines eingegebenen Z-Koordinatenwertes erfolgt.

13. Verfahren nach einem der Ansprüche 7 bis 12, dadurch gekennzeichnet, daß der Maschinennullpunkt (MNP) durch Antastung eines Prüfkörpers ermittelt wird.

## Claims

1. Position display of a manually-operated machine tool with at least two display fields (11,12) for co-ordinate values (X,Y,R,θ) and an input unit (10) for inputting required coordinate values (X,Y) for a target position (P) of a Cartesian co-ordinate system related to a workpiece (9), position-dependent signals from measuring systems (7,8) of the machine tool being passed to the position display in order to determine the actual tool position, characterised in that the Cartesian co-ordinates (X,Y) of the target position (P) are converted in a co-ordinate converter of the position display (1) on the basis of the machine zero point (MNP) of the machine tool into polar co-ordinates (R,θ), which relate to the co-ordinate system of the machine tool, and in that, upon manual processing of the workpiece (9), the residual paths still to be covered to the target position (P) are displayed in polar co-ordinates (R,θ).

2. Position display according to claim 1, characterised in that two display fields (11,12) are provided in order to display input Cartesian X/Y co-ordinates of a target position (P), and these identical display fields (11,12) are provided to display polar co-ordinates (R,θ) upon processing of the workpiece (9).

3. Position display according to one of the preceding claims, characterised in that the polar co-ordinates (R,θ) displayed upon processing, are the residual paths to be covered with a tool (3) of a radial drill machine until reaching the target position (P), a radius value (R) displayed in a display field (11) determining the required displacement path of the tool (3) in the longitudinal direction of a jib (4), and an angular value (θ) displayed in another display field (12) determining the required pivoting angle of the jib (4) about the axis (A) of a round column (5).

4. Position display according to claim 3, characterised in that the zero point (MNP) of the co-ordinate system of the radial drill machine lies on the axis of rotation (A) of the round column (5).

5. Position display according to one of claims 3 or 4, characterised in that, in order to detect the pivotal angle (θ) of the jib (4), a shaft encoder (6) driven by a friction wheel (7) is provided.

6. Position display according to claim 5, characterised in that the friction wheel (7) rolls along the circumference of the round column (5).

7. Method for operating a position display of a manually operated machine tool with at least two display fields (11,12) for co-ordinate values (X,Y,R,θ) and an input unit (10) for inputting required co-ordinate values (X,Y) of a Cartesian coordinate system related to a workpiece (9), position-dependent signals from measuring systems (7,8) of the machine tool being passed to the position display in order to determine the actual tool position, characterised by the steps:
a) the required co-ordinates (X,Y) of a target position (P) are input by actuating an input unit (10) into a memory unit of the position display and displayed on the display fields (11,12),
b) the Cartesian required co-ordinates (X,Y) are converted in a co-ordinate converter into polar co-ordinates (R,θ) which relate to the co-ordinate system of the machine tool,
c) the residual paths still to be covered to the target position (P) are calculated with reference to the actual tool position and displayed in polar co- ordinates (R,θ) as radius and angle values in the display fields (11,12) of the position display.

8. Method according to claim 7, characterised in that in a further step
d) the workpiece is pivoted about a pre-determined axis (A) through an angle (θ) determined by the co-ordinate converter and then
e) the workpiece (3) is displaced a radius (R) determined from the co-ordinate converter to target position P.

9. Method according to claim 7, characterised in that in a further step
(f) the workpiece (3) is displaced a radius (R) determined by the co-ordinate converter along a jib (4) and then
g) the workpiece (3) is pivoted about a pre-determined axis (A) through an angle (θ) determined by the co-ordinate converter.

10. Method according to claim 8, characterised in that upon the pivotal movement, the radial movement along the jib (4) is blocked and, after reaching the predetermined pivotal angle (θ), this blocking is removed and the pivotal movement is blocked.

11. Method according to claim 9, characterised in that during the radial movement, the pivotal movement is blocked and after reaching the predetermined radius value (R) this blocking is removed and the radial movement along the jib (4) is blocked.

12. Method according to one of claims 7 to 11, characterised in that, after reaching the target position (P) predetermined by (X/Y co-ordinate values, the pivotal and radial movement of the tool (3) is blocked and a longitudinal movement of the tool (3) is executed according to an input Z-co-ordinate value.

13. Method according to one of claims 7 to 12, characterised in that the machine zero point (MNP) is determined by scanning a test body.

## Revendications

1. Dispositif indicateur de position d'une machine-outil à conduite manuelle, comprenant au moins deux champs indicateurs (11,12) pour des valeurs de coordonnées (X, Y, R, θ) et une unité d'introduction (10) pour l'introduction de valeurs de coordonnées de consigne (X, Y) pour une position-cible (P) d'un système de coordonnées cartésiennes, rapporté à une pièce (9) à usiner, le dispositif indicateur de position recevant à partir de systèmes de mesure (7, 8) de la machine-outil, des signaux de position en vue de la détermination de la position actuelle de l'outil, caractérisé par le fait que les coordonnées cartésiennes (X, Y) de la position-cible (P) sont converties dans un convertisseur de coordonnées du dispositif indicateur de position (1), sur la base du point zéro machine (MNP) de la machine-outil, en coordonnées polaires (R, θ) se rapportant au système de coordonnées de la machine-outil, et que lors de l'usinage manuel de la pièce (9), les déplacements restant à parcourir jusqu'à la position-cible (P) sont indiqués en coordonnées polaires (R, θ).

2. Dispositif indicateur de position selon la revendication 1, caractérisé par le fait que deux champs indicateurs (11, 12) sont prévus pour l'indication des coordonnées cartésiennes X/Y introduites d'une position-cible (P) et que ces mêmes champs indicateurs (11, 12) sont prévus pour l'indication de coordonnées polaires (R, θ), lors de l'usinage de la pièce (9).

3. Dispositif indicateur de position suivant l'une des revendications précédentes, caractérisé par le fait que les coordonnées polaires (R, θ) indiquées lors de l'usinage sont les déplacements qui restent à parcourir à l'aide d'un outil (3) d'une perçeuse radiale jusqu'à la position-cible (P), une valeur de rayon (R) indiquée dans un champ indicateur (11) déterminant le trajet de translation nécessaire de l'outil (3) dans la direction longitudinale d'une console (4) et une valeur angulaire (θ) indiquée dans l'autre champ indicateur (12) déterminant l'angle de pivotement nécessaire de la console (4) autour de l'axe (A) d'une colonne circulaire (5).

4. Dispositif indicateur de position suivant la revendication 3, caractérisé par le fait que le point zéro (MNP) du système de coordonnées de la perçeuse radiale est situé sur l'axe de rotation (A) de la colonne circulaire (5).

5. Dispositif indicateur de position suivant l'une des revendications 3 ou 4, caractérisé par le fait qu'un capteur angulaire (8) entraîné par l'intermédiaire d'une roue à friction (7) est prévu pour déterminer l'angle de pivotement (θ) de la console (4).

6. Dispositif indicateur de position suivant la revendication 5, caractérisé par le fait que la roue à friction (7) roule sur le pourtour de la colonne circulaire (5).

7. Procédé de fonctionnement d'un dispositif indicateur de position d'une machine-outil à conduite manuelle, comprenant au moins deux champs indicateurs (11, 12) pour des valeurs de coordonnées (X, Y, R,θ) et une unité d'introduction (11) pour l'introduction de valeurs de coordonnées de consigne (X, Y) d'un système de coordonnées cartésiennes rapporté à une pièce à usiner (9), le dispositif indicateur de position recevant, à partir de systèmes de mesure (7, 8) de la machine-outil, des signaux de position, en vue de la détermination de la position actuelle de l'outil, caractérisé par les étapes suivantes :
a) les coordonnées de consigne (X, Y) d'une position-cible (P) sont introduites dans une unité de mémoire du dispositif indicateur de position par actionnement d'une unité d'introduction(10) et sont indiquées sur les champs indicateurs (11, 12),
b) les coordonnées cartésiennes de consigne (X, Y) sont converties dans un convertisseur de coordonnées en coordonnées polaires (R, θ) se rapportant au système de coordonnées de la machine-outil,
c) les trajets qui restent à parcourir jusqu'à la position-cible (P) sont calculés à l'aide de la position actuelle de l'outil et sont indiqués en coordonnées polaires (R,θ) en tant que valeurs de rayon et d'angle dans les champs indi cateurs (11, 12) du dispositif indicateur de position.

8. Procédé suivant la revendication 7, caractérisé par le fait que dans une étape supplémentaire :
d) l'outil (3) est déplacé en pivotement autour d'un axe (A) prédéterminé de la valeur angulaire (θ)) calculée par le convertisseur de coordonnées, et ensuite
e) l'outil (3) est déplacé en translation vers la position-cible (P) de la valeur de rayon calculée par le convertisseur de coordonnées.

9. Procédé suivant la revendication 7, caractérisé par le fait que dans une étape supplémentaire :
f) l'outil (3) est déplacé en translation le long d'une console (4) de la valeur de rayon (R) calculée par le convertisseur de coordonnées, et ensuite
g) l'outil (3) est déplacé en pivotement autour d'un axe prédéterminé (A) de la valeur angulaire(θ) calculée par le convertisseur de coordonnées.

10. Procédé suivant la revendication 8, caractérisé par le fait que le mouvement radial le long de la console (4) est bloqué pendant le mouvement de pivotement, et lorsque l'angle de pivotement prédéterminé (θ) est atteint, ce blocage est supprimé et le mouvement de pivotement est bloqué.

11. Procédé suivant la revendication 9, caractérisé par le fait que le mouvement de pivotement est bloqué pendant le mouvement radial et lorsque la valeur de rayon (R) prédéterminée est atteinte, ce blocage est supprimé et le mouvement radial le long de la console (4) est bloqué.

12. Procédé suivant l'une des revendications 7 à 11, caractérisé par le fait que lorsque la position-cible (P) prédéterminée par des valeurs de coordonnées X/Y est atteinte, le mouvement de pivotement et le mouvement radial de l'outil (3) sont bloqués et un mouvement longitudinal est appliqué à l'outil (3) en fonction d'une valeur de coordonnée Z introduite.

13. Procédé suivant l'une des revendications 7 à 12, caractérisé par le fait que le point zéro machine (MNP) est déterminé par palpage d'un corps étalon.
